(19) Europäisches Patentamt
European Patent Office
Office européen des brevets

(11) **EP 3 142 987 B1**

(12) **EUROPEAN PATENT SPECIFICATION**

(45) Date of publication and mention
of the grant of the patent:
**28.08.2019 Bulletin 2019/35**

(51) Int Cl.:
***C04B 35/18*** (2006.01)

(21) Application number: **15729562.7**

(22) Date of filing: **11.05.2015**

(86) International application number:
**PCT/IB2015/000667**

(87) International publication number:
**WO 2015/173620 (19.11.2015 Gazette 2015/46)**

(54) **BORON-FREE ALUMINUM CASTSHOP CERAMIC FOAM FILTER**

KERAMIKSCHAUMFILTER MIT BORFREIEM ALUMINIUM FÜR GIESSEREI

FILTRE EN MOUSSE CÉRAMIQUE DE MOULAGE D'ALUMINIUM EXEMPT DE BORE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2014 US 201461993809 P**

(43) Date of publication of application:
**22.03.2017 Bulletin 2017/12**

(73) Proprietor: **PORVAIR PLC
PE30 2JN (GB)**

(72) Inventors:
• **OLSON, Rudolph A. III
Hendersonville, NC 28792 (US)**
• **WILLER, Matt W.
Hendersonville, NC 28792 (US)**
• **TOPOLSKI, Mark J.
Hendersonville, NC 28792 (US)**

(74) Representative: **Goodman, Simon John Nye
Reddie & Grose LLP
The White Chapel Building
10 Whitechapel High Street
London E1 8QS (GB)**

(56) References cited:
WO-A1-2014/018750    WO-A2-2007/021705
WO-A2-2007/120483    WO-A2-2011/028549

## Description

## BACKGROUND

The present invention is related to an improved method for producing a glass-bonded ceramic foam filter with substantially no boron and a ceramic foam filter prepared thereby. The filter is particularly well suited for aluminum filtration without limit thereto.

In order to fabricate aluminum products having acceptable properties, such as beverage cans and aircraft body parts, the aluminum must be mostly free of inclusions and defects. When aluminum is melted at the beginning of the casting process, it becomes laden with oxides, borides, salts, and other foreign components that can ultimately manifest themselves as detrimental inclusions in the final product. It is desirable to remove these inclusions just before solidifying the aluminum. This is typically accomplished by passing the molten aluminum through a ceramic foam filter. WO 2014/018750 discloses a ceramic foam filter which comprises a sintered reaction product of 35-75 wt% aluminosilicate; 10-30 wt% colloidal silica; 0-2 wt% bentonite; and 0-35 wt% fused silica. WO 2007/021705 describes a ceramic filter prepared from a ceramic precursor with 35-70 wt% refractory aluminosilicate; 10-30 wt% colloidal silica; 0-2 wt% modified bentonite; 0-35 wt% fumed silica; 0-10 wt% pore formers and liquid.

The technique commonly used to manufacture ceramic foam filters is called "sponge replication". In the process, polyurethane foam is coated with ceramic slurry followed by drying to form a green filter and then fired. During firing, the polyurethane foam on the inside vaporizes and the remaining ceramic bonds to form a contiguous network of ceramic struts, resulting in an exoskeleton-like foam structure that positively replicates the original polyurethane foam. An example is WO 2011/028549, which discloses a filter which has a porous open celled ceramic foam body with voids separated by struts wherein a portion of the struts are densified with glass.

Through the 1980s, 1990s and early 2000s, the ceramic of choice for aluminum filters was alumina grains bonded by phosphate-based glass. This filter was relatively easy to produce and worked in most situations, but occasionally these filters suffered from mechanical failure and metal attack. Mechanical failures were thought to be a result of the high coefficient of thermal expansion. Occasionally, the filter would crush during pre-heat while constrained in a ceramic bowl, or the filter would catastrophically crack due to uneven pre-heating and resultant stresses. The metal attack typically resulted from the fact that phosphorus is easily reduced by magnesium and aluminum. Both of these failure types could ultimately lead to unwanted ceramic particles entering the product downstream.

The current state of the art ceramic foam filters employ a boron-based glass that is used to bond kyanite grain in the form of a ceramic foam monolith as represented in commonly assigned U.S. Pat. No. 8,518,528. Previous research indicated that boron was a very necessary component of this filter structure functioning to protect the kyanite grain and prevent corrosion, and erosion, of the ceramic when introduced to flowing molten high-Mg bearing aluminum alloys. Although boron-based glass bound filters have enjoyed much success, the presence of boron significantly complicates the manufacturing process and this problem is exasperated by the ever increasing demand for filters. WO 2007/120483 discloses a boron-based filter for molten aluminum alloys comprising an alumina silicate rich core and a boron glass shell and a chemical composition comprising: 20-70 wt% $Al_2O_3$, 20 - 60 wt % $SiO_2$, 0-10 wt% CaO, 0-10 wt% MgO and 2-20wt% $B_2O_3$.

Boron oxide can be a difficult material to handle in a ceramic manufacturing process. Anhydrous boron oxide is very hygroscopic and will absorb water from the atmosphere to convert to boric acid ($H_3BO_3$ or $B_2O_3 \cdot 3H_2O$). To avoid the uncertainties related to the rate of conversion, boron oxide is typically utilized in the form of boric acid. Unfortunately, the additional water weight increases material handling aspects of the material and adds additional cost to the process. Boric acid has a high solubility in water of approximately 6 grams per 100-cm$^3$. On drying, some of the solubilized boric acid is carried with the vaporized water and subsequently precipitates as a fine dust when the water vapor is cooled. This boron containing dust must be captured via dust collectors positioned in-line with the dryer exhaust. Efficient handling and capturing of this fine dust is a challenge and a costly process.

Boron is an excellent cross-linker of organic materials, thereby rendering organic binders incompatible with slurry containing solubilized boric acid. This limits the achievable green strength of the body. Boron oxide can be introduced to the slurry in a less soluble form as a glass frit, but this type of material is relatively expensive compared to other ceramic powder, and these types of frits do not have low enough solubility to inhibit cross-linking of organic binder.

Boron oxide melts at a fairly low temperature of about 450°C. During firing, some of the boron oxide can exude from the filter and stick to setters and rollers. The resultant build-up can then cause defects in subsequent filters, rendering them unusable.

With these problems, there is considerable incentive to create a new ceramic filter formulation with equal performance to boron-glass bound filters with respect to thermomechanical and corrosion resistance properties, yet with substantially no boron in the glassy binder phase. This was previously considered difficult due to the expected necessity of a boron-based glass shell protecting the grain.

In spite of the expected necessity of a boron-based glass binder, the present invention provides a filter wherein the aluminosilicate grain is bound and protected by a glass which provides adequate protection against chemical reactivity and mechanical stress, yet which is substantially free of boron.

## SUMMARY OF THE INVENTION

The invention provides a porous ceramic foam filter and a method of forming a porous ceramic foam filter as defined in the appended independent claims, to which reference should now be made. Preferred or advantageous features of the invention are set out in dependent claims.

It is an object of the invention to provide a glass bonded porous aluminosilicate ceramic filter bound by a boron free glass.

It is another object of the invention to provide a porous aluminosilicate ceramic filter which is chemically unreactive, mechanically robust, and which can be easily manufactured using standard manufacturing processes.

These and other advantages, as will be realized, are provided in a porous ceramic foam filter comprising 28-78 wt% alumina; 20-65 wt% silica; and 1-15 wt% Group II oxide.

Yet another embodiment is provided in a method of forming a porous ceramic foam filter comprising: forming a slurry comprising a solids fraction of: 28-78 wt% alumina; 20-65 wt% silica; and 1-15 wt% Group II oxide; impregnating a foam with said slurry thereby forming an impregnated foam; heating said impregnated foam to form a green ceramic foam; and heating said green ceramic foam to form said porous ceramic foam filter.

## FIGURES

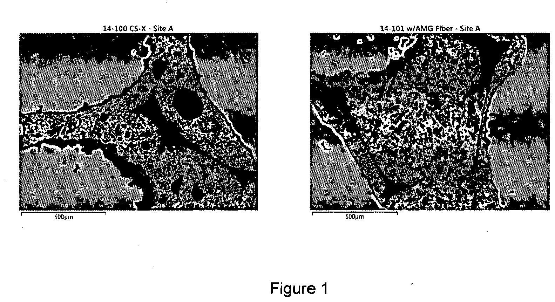

Fig. 1 provides SEM micrographs of a boron-based glass bound aluminosilicate filter on the left and an inventive filter on the right after exposure to aluminum alloy.

## DESCRIPTION

The instant invention is specific to an improved method of forming a porous ceramic foam filter comprising a core primarily comprising aluminosilicate and a glass shell which is substantially free of boron.

The invention will be described with reference to the various figures which form an integral non-limiting component of the disclosure. Throughout the disclosure similar elements will be numbered accordingly.

Through diligent research a boron-free, silica-based glass formulation has been discovered with adequate corrosion resistance. The structure of the inventive filter comprises aluminosilicate grains bonded by glass wherein the glass phase contains substantially no boron. The filter has a chemical composition of 28-78 wt% alumina, 20-65 wt% silica and 1-15 wt% Group II oxide. More preferably, the filter has a chemical composition of 28-75 wt% alumina, 20-65 wt% silica and 2-12 wt% Group II oxide. The Group II oxide is preferably selected from oxides of calcium, strontium, barium and magnesium. More preferably, the Group II oxide is calcium or magnesium and it is most preferred that the Group II oxide comprise a substantial portion of calcium. The filter comprises a core phase of aluminosilicate and a shell of glass as will be more fully understood from the discussions herein.

Any incidental $B_2O_3$ content in the filter may be present from trace amounts of boron in raw materials and is preferably below 2 wt% total in the filter, preferably less than 1 wt% and even more preferably less than 0.5 wt%. It is most preferable to have a level of boron which is below detectable limits.

A preferred embodiment is provided in a ceramic foam filter comprising 70-90 wt% of granular aluminosilicate cores and 10-30 wt% of a glassy shell encasing the cores.

The core comprises primarily aluminosilicate. The core preferably comprises 40-80 wt% alumina and 20-60 wt% silica. More preferably, the core comprises 50-70 wt% alumina and 30-50 wt% silica. The alumina and silica are preferably incorporated as an aluminosilicate such as mullite, kyanite, silimanite, calcined kaolin and andalusite. Kyanite is most preferred. Other potential core materials are other low or zero thermal expansion silicate materials such as fused silica, lithium-aluminum-silicates (petalite), and magnesium-aluminum-silicates (cordierite).

The shell encapsulates the core and binds adjacent aluminosilicate grains to each other, thereby protecting the aluminosilicate core from chemical attack during filtering and particularly chemical attack by magnesium. The shell comprises 0-20 wt% alumina, 40-80 wt% silica and 10-50 wt% Group II oxides. More preferably, the shell comprises up to 10 wt% alumina, 55-70 wt% silica and 25-40 wt% Group II oxides. It is preferable that at least 50 wt% of the Group II oxides be calcium oxide, as calcium is a suitable glass former.

The present invention takes a different approach from earlier ceramic foam filter technology. A low thermal expansion aluminosilicate grain, most preferably kyanite or mullite, is used instead of alumina to obtain improved thermal shock resistance and to reduce lateral compressive stress, however, mullite and kyanite are reactive with molten aluminum and its alloys.

To protect the aluminosilicate grain material from chemical attack, a relatively inert binder phase is used based on a glass containing Group II oxides, preferably calcia or magnesia with silica and optionally alumina. The glass bond is contiguous in the overall filter matrix forming a core-shell structure with a glass shell completely encapsulating and protecting the aggregate grain core from attack by magnesium vapor. This glass bond develops good strength at low relatively temperature and acts to flux and bond the kyanite grains together during firing. This new filter body in molten metal tests shows superior resistance to magnesium vapor attack. Figure 1 demonstrates the corrosion resistance of the inventive filter compared to a boron-based glass bonded filter. In Fig. 1, an SEM micrograph of a boron-based glass bound aluminosilicate filter is illustrated on the left prepared in accordance with U.S. Pat. No. 8,518,528, and an inventive ceramic foam filter is provided on the right wherein each is viewed after being identically subjected to a dynamic aluminum resistance test. Samples were submerged in 5182 aluminum alloy at 700°C for two hours and kept in constant motion. In general, both filters are mostly non-wetted and aluminum has not penetrated into the internal hollow struts of the filter, nor has aluminum penetrated the intergranular porosity of the ceramic body.

Other metal oxide materials may exist in the formulation in small quantities, typically less than 3 wt% as impurities. These include $K_2O$, $Na_2O$, $Fe_2O_3$, $TiO_2$, among others.

The ceramic foam material has an open cell structure with a distribution of connected voids that are surrounded by webs of ceramic material. Such a structure is commonly used for molten metal filtration and is known in the industry as ceramic foam.

The ceramic foam filter is shown to be resistant to chemical attack by molten aluminum alloys under typical use conditions.

The ceramic foam filter is lightweight with a preferred density of about 0.25-0.40 g/cc.

The filter is shown to be substantially non-reactive and does not generate phosphine gases or reactive materials after filtering molten aluminum alloys. Prior art phosphate bonded alumina filters have been shown to generate phosphine gases and to be subject to combustion after use. The instant filters eliminate those problems associated with phosphate bonded alumina containing filters.

It is preferable to incorporate ceramic fibers, which strengthen the material. Particularly preferred fibers include alumina, silica and silicates of aluminum, magnesium, calcium and combinations thereof. Isofrax® 1260 (magnesium silicate) or Insulfrax® 3010/3011 (CaMg silicate) fibers are particularly preferred. Other preferred fibers are Pyrolog®, comprising about 47 wt% $Al_2O_3$ and about 53 wt% $SiO_2$.

The primary porosity of the filter is imparted by the macrostructure of the foam, as the filter is formed as an exoskeleton of the polyurethane precursor thereby forming a replicated foam by coating with slurry followed by drying and firing. The primary pore size of the foam, and ultimately the filter, is preferably at least 0.12 to no more than 3.9 pores per mm (at least 3 to no more than 100 ppi) and more preferably at least 0.78 to no more than 2.8 pores per mm (at least 20 to no more than 70 ppi). Under standard commercial operations a filter of size 58.4 x 58.4 x 5.1 cm (23 x 23 x 2 inches) should be capable of processing on the order of 100 tons of metal in one cast.

During the sintering process, dispersed microporous voids form in the glass binder phase. This dispersed microporosity is believed to further improve the thermal shock resistance since the voids tend to blunt the propagation of any thermal shock cracks that may develop. The overall coefficient of thermal expansion is significantly lower than that of phosphate bonded alumina filter and is comparable to boron-based glass bonded alumina filters. The microporosity has an average pore size of at least 0.1 to no more than 20 microns and more preferably 0.5 to 10 microns.

Kyanite is a high-pressure polymorph of aluminosilicates of the nesosilicate group, which includes kyanite, silimanite, and andalusite. These three aluminous or alumina-rich minerals are chemically identical with nominal composition, $Al_2SiO_5$, but have different crystal structures.

The ceramic foam material is made through the impregnation of an aqueous slurry onto the struts of a flexible open-cell polymer foam precursor. Subsequent drying and firing of the material creates the final ceramic foam product.

The foam precursor could be of any type of material that has resilience sufficient to recover its original shape after compression. Generally polyurethane foam is used for this purpose.

The ceramic slurry is prepared through mixing the desired ingredients together to form an aqueous suspension of particles. The slurry preferably has rheological characteristics such that the slurry flows easily with applied stress, such as during the impregnation of the slurry into the polyurethane foam, but does not flow when the stress is removed. Such slurries have an inherent high yield stress and shear-thinning characteristics.

In the preparation of the material of this invention, the starting ingredients preferably have a high content of kyanite grain of size -325 mesh. The material generally has a nominal particle size of typically less than 44 microns. However, it is acceptable to utilize a coarser or finer kyanite grain size.

Kyanite powder is a commonly available raw material used widely in a number of ceramic products. The kyanite powder is a mined, cleaned and calcined product containing approximately 95% kyanite mineral, 3% quartz and 2% other materials or impurities. The powder used generally has a make-up of approximately 58 wt% $Al_2O_3$, 40 wt% $SiO_2$, 1 wt% $TiO_2$ and a balance of impurities. Kyanite mineral is known to transform to the lower-density mullite crystalline phase at temperatures greater than 1200°C. This transformation is irreversible.

This invention demonstrates the use of kyanite powder in the manufacture of the ceramic foam filters, but other aluminosilicates such as amorphous silica, magnesium aluminum silicate, or lithium aluminum silicate powder may be used to demonstrate the invention. Examples of such commercially available materials include mullite, cordierite, petalite, or fused silica.

The invention preferably utilizes kyanite powder in the aqueous slurry in a range of 40-60 wt%. It is thought that the kyanite material imparts low thermal expansion characteristics to the finished product. Further, the raw material is cost-effective in bulk quantities and has an expected long-term stable supply.

The aqueous slurry additionally utilizes raw materials that provide glass phase formation for the final product during firing. Group II oxides are widely available commercially in large quantities and the choice of raw materials is not particularly limited herein with the exception of the level of impurities listed elsewhere herein and their impact on the rheological behavior of the slurry. This glass comprises the shell material, that in-turn protects the aluminosilicate grain from attack by the molten aluminum alloys in use.

The aqueous slurry preferably comprises adjuvants for controlling various properties. Particularly preferred adjuvants include surfactants, rheology modifiers, anti-foamants, sintering aids, solvents, dispersants and the like. The slurry can be defined as having a solids fraction, which is the inorganic solids in suspension, and a carrier phase, wherein the solids fraction includes the core and shell precursors and the carrier phase includes solvents and adjuvants. Water is the preferred solvent or carrier.

Drying of the ceramic material after impregnation of the precursor foam with the aqueous ceramic slurry is generally performed in a convection-type dryer at a temperature between 100°C and 600°C for a duration of between 15 minutes and 6 hours. Shorter durations are desirable for process economics and high manufacturing rates.

Firing of the ceramic material generally occurs at temperatures at which the glassy phase of the material can form and bond to create the strength and corrosion resistance characteristics that are desired in the final product. Firing is generally performed in a continuous furnace over a duration of 1-3 hours with peak temperature greater than 1100°C maintained for 15 minutes to one hour. Lower temperatures and shorter durations improve manufacturing economics. However, sufficient time and temperature must be provided to achieve the desired strength and corrosion resistance properties of the material.

The rate of thermal expansion of the completed filter is preferably between $1.5 \times 10^{-6}$ and $7.5 \times 10^{-6}$ (mm/mm)/°C. More preferably the rate of thermal expansion of the completed filter is between $5.0 \times 10^{-6}$ and $7.0 \times 10^{-6}$ (mm/mm)/°C. This test is performed according to ASTM E831.

The Modulus of Rupture (MOR) is a common test used to test the strength of ceramic materials. In the test, a test bar nominally 30x5x5 cm (12x2x2 inches) is broken in three-point loading with a lower span of 15.2 cm (6 inches). The maximum force required to break the test bar is recorded and the MOR is calculated as:

$$MOR = 3PL/2Wt^2$$

where P is the breaking load in pounds, L is the span in inches, W the part width in inches, and t the part thickness in inches. For the ceramic foam filter of this invention, the MOR is greater than 50 psi at a relative density of less than 11%.

Corrosion testing of the final product is critical to evaluate the ability of the material to withstand the corrosive environment of aluminum alloy. Corrosion testing is performed through laboratory testing, field-testing or both. In laboratory testing, small sample coupons are cut from representative materials and exposed to a hot, corrosive aluminum alloy for a specified period of time. The alloy used is typically selected to contain at least 4.5 wt % magnesium to represent the worst case for alloy corrosion conditions. A variety of melt temperatures are explored to evaluate the impact of variation of operating conditions in the field. In this laboratory testing, the sample must be continuously exposed to fresh metal to ensure that field conditions are approximated as closely as possible. To accomplish this, the sample is either stirred while submerged in the molten alloy, or it is continuously raised and lowered to impart flow through the porosity of the ceramic foam filter sample. After at least two hours of metal exposure of this type, the sample is removed from the molten metal and cooled quickly upon an aluminum chill plate. This rapid directional solidification ensures that a relatively sound or porosity-free sample is obtained for subsequent metallurgical analysis.

In field-testing, an entire filter is tested in a production environment using a semi-continuous vertical direct chill process. Test time is typically 35 to 120 minutes. The test site is selected where AA6063 or AA6061 or other magnesium-bearing aluminum alloy is used. Standard filter gaskets and filter preheating conditions are used. The data gathered during the testing includes metal flow rate and casting conditions, molten metal temperature and visual observations regarding the filter condition during pre-heat and immediately after casting. After casting, the used filters are subjected to metallurgical analysis to evaluate their ability to withstand the corrosive molten aluminum alloy.

Pore size is typically referred to in the art as the number of pores in a linear dimension such as pores per inch. A higher ppi value has a smaller cell diameter. This is a standard method of reporting pore size.

In the present description, the term aluminum alloy is intended to be inclusive with aluminum.

The density of porous ceramic materials is typically reported as a relative density. A relative density is the ratio of measured density to theoretical density wherein theoretical density assumes no voids.

## Claims

1. A porous ceramic foam filter comprising:

    28-78 wt% alumina;
    20-65 wt% silica;

1-15 wt% Group II oxide; and
below 2 wt% $B_2O_3$.

2. A method of forming a porous ceramic foam filter comprising:

forming a slurry comprising a solids fraction of:

28-78 wt% alumina;
20-65 wt% silica;
1-15 wt% Group II oxide; and
below 2 wt% $B_2O_3$;

impregnating a foam with said slurry thereby forming an impregnated foam;
heating said impregnated foam to form a green ceramic foam; and
heating said green ceramic foam to form said porous ceramic foam filter.

3. The method of claim 2 wherein said slurry comprises 40-80 wt% said solids fraction.

4. The porous ceramic foam filter of claim 1 or the method of claim 2 or 3
wherein said filter comprises less than 1 wt% $B_2O_3$, and preferably less than 0.5 wt% $B_2O_3$.

5. The porous ceramic foam filter or the method of any preceding claim wherein said filter or said solids fraction comprises less than 3 wt% other metal oxides.

6. The porous ceramic foam filter or the method of any preceding claim wherein said filter or said solids fraction comprises:
28-75 wt% alumina.

7. The porous ceramic foam filter or the method of any preceding claim wherein said filter or said solids fraction comprises:
2-12 wt% Group II oxide.

8. The porous ceramic foam filter or the method of any preceding claim wherein said Group II oxide is selected from calcium, strontium, barium and magnesium, and preferably wherein at least 50 wt% of said Group II oxide is calcium oxide.

9. The porous ceramic foam filter or the method of any preceding claim wherein said filter comprises an aluminosilicate core and a glass shell, wherein said aluminosilicate core preferably comprises kyanite.

10. The porous ceramic foam filter or the method of any preceding claim wherein said filter comprises an aluminosilicate core and a glass shell, said filter comprising 70-90 wt% of said aluminosilicate core and 10-30 wt% of said glass shell.

11. The porous ceramic foam filter or the method of any preceding claim wherein said filter comprises:

an aluminosilicate core; and
a shell comprising:

40-80 wt% silica;
10-50 wt% Group II oxide; and
0-20 wt% alumina;

said shell preferably comprising:

55-70 wt% silica;
25-40 wt% Group II oxide; and
0-10 wt% alumina.

12. The porous ceramic foam filter or the method of any preceding claim wherein said filter comprises:

an aluminosilicate core comprising:

40-80 wt% alumina; and
20-60 wt% silica; and
a shell;

said aluminosilicate core preferably comprising:

50-70 wt% alumina; and
30-50 wt% silica.

13. The porous ceramic foam filter or the method of any preceding claim wherein said filter comprises:

an aluminosilicate core comprising:

40-80 wt% alumina; and
20-60 wt% silica; and

a shell comprising:

40-80 wt% silica;
10-50 wt% Group II oxide; and
0-20 wt% alumina.

14. The porous ceramic foam filter or the method of any preceding claim wherein said filter or said slurry further comprises ceramic fibers;

15. The porous ceramic foam filter or the method of claim 14 wherein said ceramic fibers comprise at least one material selected from alumina, silica, silicates of aluminum, magnesium and calcium.

16. The porous ceramic foam filter or the method of any preceding claim wherein said filter has a density of 0.25 to 0.40 g/cc.

17. The porous ceramic foam filter or the method of any preceding claim wherein said filter has a porosity of at least 0.12 to no more than 3.9 pores per mm (3 to no more than 100 ppi); and preferably of at least 0.78 to no more than 2.8 pores per mm (20 to no more than 70 ppi).

18. The porous ceramic foam filter or the method of any preceding claim wherein said filter has micro-porosity with an average pore size of at least 0.1 to no more than 20 microns; and preferably of at least 0.15 to no more than 10 microns.

**Patentansprüche**

1. Poröser Schaumkeramikfilter, umfassend:

   28 - 78 Gew.-% Aluminiumoxid;
   20 - 65 Gew.-% Siliciumdioxid;
   1 - 15 Gew.-% Gruppe-II-Oxid; und
   unter 2 Gew.-% $B_2O_3$.

2. Verfahren zur Herstellung eines porösen Schaumkeramikfilters, umfassend:

   Herstellen eines Schlickers, umfassend eine Feststofffraktion aus:

   28 - 78 Gew.-% Aluminiumoxid;
   20 - 65 Gew.-% Siliciumdioxid;
   1 - 15 Gew.-% Gruppe-II-Oxid; und
   unter 2 Gew.-% $B_2O_3$;

   Imprägnieren eines Schaums mit dem genannten Schlicker, dadurch Formen eines imprägnierten Schaums;
   Erhitzen des genannten imprägnierten Schaums zum Bilden eines Schaumkeramikgrünlings; und
   Erhitzen des genannten Schaumkeramikgrünlings zum Bilden des genannten porösen Schaumkeramikfilters.

3. Verfahren nach Anspruch 2, wobei der genannte Schlicker 40 - 80 Gew.-% der genannten Feststofffraktion aufweist.

4. Poröser Schaumkeramikfilter nach Anspruch 1 oder Verfahren nach Anspruch 2 oder 3, wobei der genannte Filter weniger als 1 Gew.-% $B_2O_3$ und vorzugsweise weniger als 0,5 Gew.-% $B_2O_3$ aufweist.

5. Poröser Schaumkeramikfilter oder Verfahren nach einem der vorhergehenden Ansprüche, wobei der genannte Filter oder die genannte Feststofffraktion weniger als 3 Gew.-% andere Metalloxide aufweist.

6. Poröser Schaumkeramikfilter oder Verfahren nach einem der vorhergehenden Ansprüche, wobei der genannte Filter oder die genannte Feststofffraktion Folgendes aufweist:
   28 - 75 Gew.-% Aluminiumoxid.

7. Poröser Schaumkeramikfilter oder Verfahren nach einem der vorhergehenden Ansprüche, wobei der genannte Filter oder die genannte Feststofffraktion Folgendes aufweist:
   2 - 12 Gew.-% Gruppe-II-Oxid.

8. Poröser Schaumkeramikfilter oder Verfahren nach einem der vorhergehenden Ansprüche, wobei das genannte Gruppe-II-Oxid aus Calcium, Strontium, Barium und Magnesium ausgewählt wird; und vorzugsweise wobei mindestens 50 Gew.-% des genannten Gruppe-II-Oxids Calciumoxid ist.

9. Poröser Schaumkeramikfilter oder Verfahren nach einem der vorhergehenden Ansprüche, wobei der genannte Filter einen Aluminosilicatkern und eine Glasschale aufweist, wobei der genannte Aluminosilicatkern vorzugsweise Kyanit umfasst.

10. Poröser Schaumkeramikfilter oder Verfahren nach einem der vorhergehenden Ansprüche, wobei der genannte Filter einen Aluminosilicatkern und eine Glasschale aufweist, wobei der genannte Filter 70 - 90 Gew.-% des genannten Aluminosilicatkerns und 10 - 30 Gew.-% der genannten Glasschale umfasst.

11. Poröser Schaumkeramikfilter oder Verfahren nach einem der vorhergehenden Ansprüche, wobei der genannte Filter Folgendes aufweist:

    einen Aluminosilicatkern; und
    eine Schale, umfassend:

    40 - 80 Gew.-% Siliciumdioxid;
    10 - 50 Gew.-% Gruppe-II-Oxid; und
    0 - 20 Gew.-% Aluminiumoxid;

    wobei die genannte Schale vorzugsweise Folgendes umfasst:

    55 - 70 Gew.-% Siliciumdioxid;
    25 - 40 Gew.-% Gruppe-II-Oxid; und
    0 - 10 Gew.-% Aluminiumoxid.

12. Poröser Schaumkeramikfilter oder Verfahren nach einem der vorhergehenden Ansprüche, wobei der genannte Filter Folgendes aufweist:

    einen Aluminosilicatkern, umfassend:

    40 - 80 Gew.-% Aluminiumoxid; und
    20 - 60 Gew.-% Siliciumdioxid; und

eine Schale;

wobei der genannte Aluminosilicatkern vorzugsweise Folgendes umfasst:

50 - 70 Gew.-% Aluminiumoxid;
30 - 50 Gew.-% Siliciumdioxid.

13. Poröser Schaumkeramikfilter oder Verfahren nach einem der vorhergehenden Ansprüche, wobei der genannte Filter Folgendes aufweist:

einen Aluminosilicatkern, umfassend:

40 - 80 Gew.-% Aluminiumoxid; und
20 - 60 Gew.-% Siliciumdioxid; und

eine Schale, umfassend:

40 - 80 Gew.-% Siliciumdioxid.
10 - 50 Gew.-% Gruppe-II-Oxid; und
0 - 20 Gew.-% Aluminiumoxid.

14. Poröser Schaumkeramikfilter oder Verfahren nach einem der vorhergehenden Ansprüche, wobei der genannte Filter oder der genannte Schlicker ferner Keramikfasern aufweist.

15. Poröser Schaumkeramikfilter oder Verfahren nach Anspruch 14, wobei die genannten Keramikfasern mindestens ein aus Aluminiumoxid, Siliciumdioxid, Aluminiumsilikaten, Magnesium und Calcium ausgewähltes Material umfassen.

16. Poröser Schaumkeramikfilter oder Verfahren nach einem der vorhergehenden Ansprüche, wobei der genannte Filter eine Dichte von 0,25 bis 0,40 g/cm$^3$ hat.

17. Poröser Schaumkeramikfilter oder Verfahren nach einem der vorhergehenden Ansprüche, wobei der genannte Filter eine Porosität von mindestens 0,12 bis höchstens 3,9 Poren pro mm (3 bis höchstens 100 ppi); und vorzugsweise von mindestens 0,78 bis höchstens 2,8 Poren pro mm (20 bis höchstens 70 ppi) hat.

18. Poröser Schaumkeramikfilter oder Verfahren nach einem der vorhergehenden Ansprüche, wobei der genannte Filter eine Mikroporosität mit einer durchschnittlichen Porengröße von mindestens 0,1 bis höchstens 20 Mikrometer; und vorzugsweise von mindestens 0,15 bis höchsten 10 Mikrometer hat.

**Revendications**

1. Filtre en mousse céramique poreuse comprenant :

28 à 78 % en poids d'alumine ;
20 à 65 % en poids de silice ;
1 à 15 % en poids d'oxyde de groupe II ; et
moins de 2 % en poids de B$_2$O$_3$.

2. Procédé de formation d'un filtre en mousse céramique poreuse comprenant :

la formation d'une pâte comprenant une fraction solide de :

28 à 78 % en poids d'alumine ;
20 à 65 % en poids de silice ;
1 à 15 % en poids d'oxyde de groupe II ; et
moins de 2 % en poids de B$_2$O$_3$ ;

l'imprégnation d'une mousse avec ladite pâte formant ainsi une mousse imprégnée ;
le chauffage de ladite mousse imprégnée pour former une mousse céramique crue ; et
le chauffage de ladite mousse céramique crue pour former ledit filtre en mousse céramique poreuse.

3. Procédé selon la revendication 2 dans lequel ladite pâte comprend 40 à 80 % en poids de ladite fraction solide.

4. Filtre en mousse céramique poreuse selon la revendication 1 ou procédé selon la revendication 2 ou 3, ledit filtre comprenant moins de 1 % en poids de B$_2$O$_3$, et de préférence moins de 0,5 % en poids de B$_2$O$_3$.

5. Filtre en mousse céramique poreuse ou procédé selon n'importe quelle revendication précédente dans lequel ledit filtre ou ladite fraction solide comprend moins de 3 % en poids d'autres oxydes métalliques.

6. Filtre en mousse céramique poreuse ou procédé selon n'importe quelle revendication précédente dans lequel ledit filtre ou ladite fraction solide comprend: 28 à 75 % en poids d'alumine.

7. Filtre en mousse céramique poreuse ou procédé selon n'importe quelle revendication précédente dans lequel ledit filtre ou ladite fraction solide comprend : 2 à 12 % en poids d'oxyde de groupe II.

8. Filtre en mousse céramique poreuse ou procédé selon n'importe quelle revendication précédente dans lequel ledit oxyde de groupe II est sélectionné parmi calcium, strontium, baryum et magnésium, et de préférence dans lequel au moins 50 % en poids dudit oxyde de groupe II est de l'oxyde de calcium.

9. Filtre en mousse céramique poreuse ou procédé selon n'importe quelle revendication précédente dans lequel ledit filtre comprend un coeur d'aluminosilicate et une coque en verre, ledit coeur d'aluminosilicate comprenant de préférence de la cyanite.

10. Filtre en mousse céramique poreuse ou procédé selon n'importe quelle revendication précédente dans lequel ledit filtre comprend un coeur d'aluminosilicate et une coque en verre, ledit filtre comprenant 70 à 90 % en poids dudit coeur d'aluminosilicate et 10 à 30 % en poids de ladite coque en verre.

11. Filtre en mousse céramique poreuse ou procédé selon n'importe quelle revendication précédente dans lequel ledit filtre comprend :

un coeur d'aluminosilicate ; et
une coque comprenant :

40 à 80 % en poids de silice ;
10 à 50 % en poids d'oxyde de groupe II ; et
0 à 20 % en poids d'alumine ;

ladite coque comprenant de préférence :

55 à 70 % en poids de silice ;
25 à 40 % en poids d'oxyde de groupe II ; et
0 à 10 % en poids d'alumine.

12. Filtre en mousse céramique poreuse ou procédé selon n'importe quelle revendication précédente dans lequel ledit filtre comprend:

un coeur d'aluminosilicate comprenant :

40 à 80 % en poids d'alumine ; et
20 à 60 % en poids de silice ; et

une coque ;
ledit coeur d'aluminosilicate comprenant de préférence :

50 à 70 % en poids d'alumine ; et
30 à 50 % en poids de silice.

13. Filtre en mousse céramique poreuse ou procédé selon n'importe quelle revendication précédente dans lequel ledit filtre comprend :

un coeur d'aluminosilicate comprenant :

40 à 80 % en poids d'alumine ; et
20 à 60 % en poids de silice ; et

une coque comprenant :

40 à 80 % en poids de silice ;
10 à 50 % en poids d'oxyde de groupe II ; et
0 à 20 % en poids d'alumine.

14. Filtre en mousse céramique poreuse ou procédé selon n'importe quelle revendication précédente dans lequel ledit filtre ou ladite pâte comprend en outre des fibres céramiques.

15. Filtre en mousse céramique poreuse ou procédé selon la revendication 14 dans lequel lesdites fibres céramiques comprennent au moins un matériau sélectionné parmi alumine, silice, silicates d'aluminium, magnésium et calcium.

16. Filtre en mousse céramique poreuse ou procédé selon n'importe quelle revendication précédente dans lequel ledit filtre a une densité de 0,25 à 0,40 g/cc.

17. Filtre en mousse céramique poreuse ou procédé selon n'importe quelle revendication précédente dans lequel ledit filtre a une porosité d'au moins 0,12 jusqu'à pas plus de 3,9 pores par mm (3 à pas plus de 100 ppi) ; et de préférence d'au moins 0,78 à pas plus de 2,8 pores par mm (20 à pas plus de 70 ppi).

18. Filtre en mousse céramique poreuse ou procédé selon n'importe quelle revendication précédente dans lequel ledit filtre a une micro-porosité avec une grosseur de pore moyenne d'au moins 0,1 à pas plus de 20 microns ; et de préférence d'au moins 0,15 à pas plus de 10 microns.

14-100 CS-X - Site A

14-101 w/AMG Fiber - Site A

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014018750 A
- WO 2007021705 A
- WO 2011028549 A
- US 8518528 B
- WO 2007120483 A